# EUROPÄISCHE PATENTSCHRIFT

(11) **EP 1 323 585 B1**
(45) Veröffentlichungstag und Bekanntmachung des Hinweises auf die Patenterteilung: **26.04.2006**
(21) Anmeldenummer: 02027374.4
(22) Anmeldetag: 09.12.2002
(51) Int. Cl.: B60R 16/02, B60K 37/06

(54) **Eingabe-/Ausgabevorrichtung für ein Cockpit-Modul eines Kraftfahrzeuges und Verfahren zu ihrer Herstellung**
Input/Output apparatus for a cockpit module of a vehicle and method of manufactoring
Dispositif d'entrée et de sortie pour un module de tableau de bord d'un véhicule et procédé de fabrication

(30) Priorität: 21.12.2001 DE 10163236
(43) Veröffentlichungstag der Anmeldung: 02.07.2003
(73) Patentinhaber: ROBERT BOSCH GMBH, 70442 Stuttgart (DE)
(72) Erfinder: Preissl, Reinhold, 70439 Stuttgart (DE)

(56) Entgegenhaltungen:
- EP-A- 0 867 792
- EP-A- 1 282 238
- DE-U1- 8 709 924
- FR-A- 2 819 223

## Beschreibung

Die Erfindung betrifft eine Eingabe-/Ausgabevorrichtung für ein Kraftfahrzeug und ein Verfahren zum elektrischen Kontaktieren von Bedienelementen an einem Cockpit-Modul eines Kraftfahrzeuges.

An einem Cockpit-Modul eines Kraftfahrzeuges können im allgemeinen verschiedene Bedienelemente z. B. Tastensensoren, Drehschalter, Wippschalter und Mikrophone angeordnet werden. Die Bedienelemente weisen elektrische Steckkontakte auf, mit denen sie an den Kabelbaum des Kraftfahrzeuges angeschlossen werden. Sie werden im allgemeinen hinter einer Blende oder einer anderen Abdeckvorrichtung derartig montiert, daß sie von außen bedient werden können.

Da in Cockpit-Modulen von Fahrzeugen eine zunehmende Anzahl von Bedienelementen angeordnet wird, werden zum Teil mehrere Bedienelemente in einem Schaltermodul zusammengefaßt, das in Öffnungen der Abdeckvorrichtung austauschbar montiert werden kann. Der Anschluß der einzelnen Bedienelemente erfolgt wiederum mittels ihrer elektrischen Steckverbindungen direkt an dem Kabelbaum.

Bei der steigenden Zahl der Elektronikfunktionen werden die großbauenden Schalter zunehmend durch multifunktionale Elektronikmodule ersetzt, die zum Teil mit CAN-Schnittstellen zum Anschluss an den CAN-Bus des Kraftfahrzeuges ausgestattet sind. Die Steckkontakte der einzelnen Bedienelemente werden hierbei mit der CAN-Schnittstelle des Elektronikmoduls verbunden.

Nachteilhaft an derartigen Eingabe-/Ausgabevorrichtungen von Cockpit-Modulen ist insbesondere die große Anzahl elektrischer Steckerkontakte und Steckverbindungen. Die Herstellung der Steckverbindungen erfordert einen hohen Zeitaufwand und führt zu störenden Übergangswiderständen.

Weiterhin ist ein Austausch fehlerhafter Bedienelemente oder Anzeigeeinrichtungen meistens mit erheblichem Aufwand verbunden. Hierzu muss zunächst eine teilweise Demontage des Cockpit-Moduls vorgenommen werden, um die Steckverbindungen zu lösen, das fehlerhafte Bedienelement auszutauschen und neu zu kontaktieren. Bei multifunktionalen Elektronikmodulen können in der Regel die einzelnen Bedienelemente nicht separat ersetzt werden, so dass das gesamte Elektronikmodul durch ein neues ersetzt werden muss.

Aus der DE 8709924 U1 (Oberbegriff von Anspruch 1) ist ein Autoradio mit Diebstahlschutz bekannt. Die Bedienelemente sind auf einem Bedienteil zusammengefasst, das von der Frontplatte leicht gelöst werden kann. Zwischen dem Bedienteil und dem Radio ist eine Infrarot- oder eine Ultraschall-Übertragungsstrecke vorgesehen. Elektrische Kontakte selbst sind nicht erforderlich.

Die erfindungsgemäße Eingabe-/Ausgabevorrichtung nach Anspruch hat demgegenüber insbesondere den Vorteil, dass eine einfache und schnelle Herstellung mitsamt Einbau in ein Cockpit-Modul eines Kraftfahrzeuges ermöglicht wird. Hierbei wird die Datenübertragung zwischen den am Cockpit vorgesehenen Bedienelementen und Anzeigeeinrichtungen sowie den hinter dem Cockpit verlaufenden Datenleitungen des Kraftfahrzeuges vorteilhafterweise nur wenig beeinträchtigt. Ein Austausch fehlerhafter Komponenten kann vorteilhafterweise schnell und mit geringen Kosten durchgeführt werden.

Erfindungsgemäß erfolgt die Kontaktierung zwischen den Bedienelementen und den Datenleitungen des Kraftfahrzeuges kontaktfrei bzw. berührungslos. Hierzu können grundsätzlich beliebige kontaktfreie Verbindungsmittel, zum Beispiel auch elektrooptische Verbindungsmittel, verwendet werden. Vorteilhafterweise werden die Verbindungsmittel jedoch als induktive und/oder kapazitive Antennen ausgebildet, die durch Leiterbahnen mit relativ geringem Aufwand, platzsparend und mit hoher Datenübertragungsrate ausgebildet werden können.

Die Bedienelemente und Ausgabeeinrichtungen sind mit den ersten Verbindungsmitteln auf einem zum Fahrzeuginnenraum hin angeordneten Sensorträger angeordnet und stehen hierbei in berührungsloser Verbindung mit den zweiten Verbindungsmitteln des Anschlussträgers, der in Fahrtrichtung vor dem Sensorträger angeordnet ist und einen Anschluß an die Datenleitungen des Kraftfahrzeuges aufweist. Die zweiten Verbindungsmittel können hierbei in an sich bekannter Weise einzeln mit den Datenleitungen des Kraftfahrzeuges kontaktiert sein oder über eine CAN-Schnittstelle des Anschlussträgers direkt an den CAN-Bus des Kraftfahrzeuges angeschlossen sein. Die Bedienelemente und ggf. auch Ausgabeeinrichtungen sind auf dem Sensorträger angebracht, der ggf. von einer Blende zum Fahrgastraum hin abgedeckt wird. Bei Austausch oder Wartung einzelner Bedienelemente oder Ausgabeeinrichtungen kann nach Entfernen der Blende der gesamte Sensorträger abgenommen werden, ohne hierzu Kontakte von Datenleitungen lösen zu müssen. Der Anschlussträger ist hierbei relativ wartungsarm und muß selten ausgetauscht werden.

Der Anschlussträger und der Sensorträger können durch übereinandergeklebte Folien oder vorteilhafterweise durch übereinanderliegende Leiterplatten gebildet werden. In beiden Fällen können die ersten und zweiten Verbindungsmittel für die Datenübertragung durch sich gegenüberliegende Leiterbahnen ausgebildet werden, die als induktive und/oder kapazitive Antennen wirken. Die als Verbindungsmittel dienenden Leiterbahnen können auf beiden Seiten der Leiterplatten vorgesehen sein, da die induktiven oder kapazitiven Signale von den Leiterplattenlagen nicht wesentlich beeinträchtigt werden. Folien können hierbei direkt auf das Cockpit-Modul aufgeklebt werden. Leiterplatten werden vorteilhafterweise mit geeigneter Passung in eine geeignete Aussparung in dem Cockpit-Modul eingesetzt. Die Sensor-Leiterplatte kann hierbei auf ihrer hinteren, d. h. zum Fahrzeug-Innenraum hin zeigenden, Metallschicht mit geeigneten Bedienelementen und Ausgabeeinrichtungen bestückt werden. Die Blende kann geeignete Öffnungen bzw. Freiräume zur Bedienung der Bedienelemente, oder flexible Abdeckbereiche zum Schutz der Bedienelemente aufweisen.

Die erfindungsgemäße Eingabe-/Ausgabevorrichtung kann somit als in Fahrzeug-Längsrichtung kleinbauendes Modul ausgebildet sein, das sich über im wesentlichen zwei Leiterplatten oder zwei Folien mit daraufliegenden Bedienelementen erstreckt. Diese können insbesondere Tastensensoren bzw. Taster, Wippschalter und Drehschalter sein, die vorteilhafterweise als elektromechanische oder elektrostatische Bedienelemente ausgebildet sind. Elektromechanische und elektrostatische Tastensensoren bzw. Tastenfelder vermitteln hierbei dem Benutzer durch elektromechanische Ausbildung eines Gegendruckes bzw. Aufbau eines elektrostatischen Feldes den Eindruck, einen mechanischen Tastschalter eingedrückt zu haben, so daß trotz geringer Längserstreckung dem Benutzer signalisiert wird, dass er die gewünschte Funktion betätigt hat. Hierdurch wird eine hohe Benutzerfreundlichkeit erreicht, bei der eine Ablenkung des Fahrers zur Überprüfung, ob eine gewünschte Funktion gesetzt ist, weitgehend vermieden werden kann. Ergänzend kann über eine akustische Ausgabeeinrichtung, zum Beispiel einen auf dem Sensorträger oder außerhalb des Sensorträgers vorgesehenen Lautsprecher, ein akustisches Signal, zum Beispiel ein klickartiges Geräusch, ausgegeben werden.

Erfindungsgemäß kann ein einheitlicher Anschlussträger zur Aufnahme unterschiedlicher Sensorträger mit verschiedener Bestückung von Bedienelementen und Anzeigeeinrichtungen vorgesehen sein, so daß eine kostengünstige, schnell montierbare Modulbauweise mit einfacher Wartung realisiert wird.

Die Erfindung wird im folgenden anhand der beiliegenden Zeichnungen an einigen Ausführungsformen näher erläutert. Es zeigen:
Figur 1 eine perspektivische, teilweise auseinandergezogene Ansicht einer Eingabe-/Ausgabevorrichtung gemäß einer Ausführungsform der Erfindung;
Figur 2 ein Blockschaltbild der erfindungsgemäßen Eingabe-/Ausgabevorrichtung.

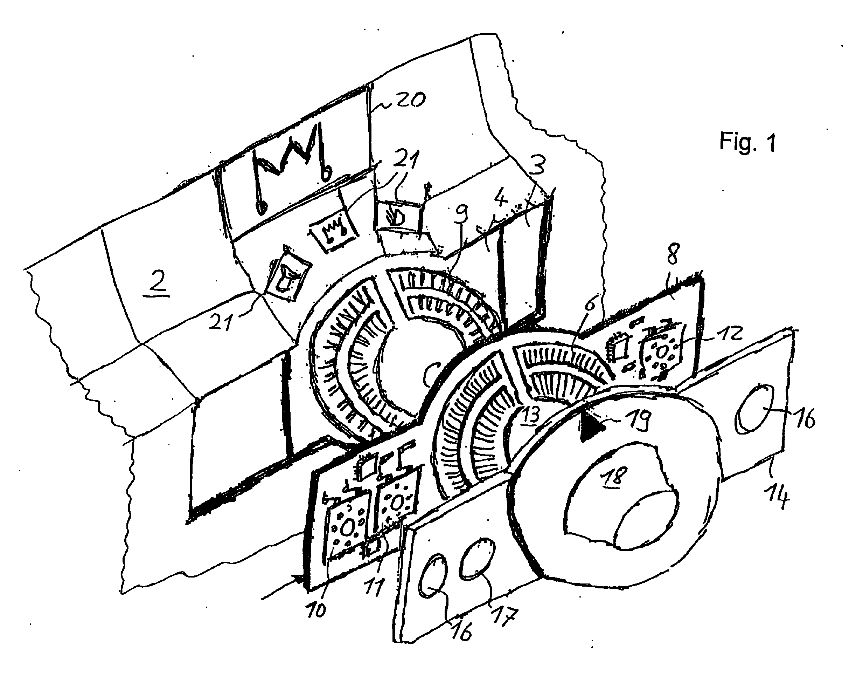

In einem Cockpit-Modul 2 ist gemäß Figur 1 eine Aussparung 3 ausgebildet, in die eine Verbindungs-Leiterplatte 4 eingesetzt ist und diese weitgehend verschließt. An ihrer nicht gezeigten Vorderseite weist sie eine CAN-Schnittstelle auf, die an den CAN-Bus des Kraftfahrzeuges angeschlossen ist. An der in Fahrtrichtung nach hinten zeigenden Rückseite sind - in dieser Ausführungsform in ringförmigen konzentrischen Bereichen angeordnete - kapazitive oder induktive zweite Antennen 9 durch Leiterbahnabschnitte gebildet, die als zweite Verbindungsmittel für eine berührungslose Datenübertragung und Leistungsversorgung dienen.

Eine Sensor-Leiterplatte 8 ist auf die Verbindungs-Leiterplatte 4 gesetzt und liegt in der Aussparung 3 an. Auf der gezeigten rückseitigen Metallschicht der Sensor-Leiterplatte 8 sind verschiedene Bauelemente, insbesondere Tastensensoren 10, 12, ein Lautsprecher 11 und ein Drehknopf 13 vorgesehen. Weiterhin sind auf der Rückseite der Sensor-Leiterplatte 8 - oder alternativ hierzu auf einer mittleren Metallschicht oder der vorderseitigen Metallschicht - Leiterbahnabschnitte als induktive oder kapazitive erste Antennen 6 ausgebildet, die als erste Verbindungsmittel den als zweite Verbindungsmittel dienenden Antennen 9 direkt gegenüberliegen. Bei der gezeigten Ausführungsform liegen eine oder mehrere Lagen der Sensor-Leiterplatte zwischen den Antennen 6 und 9, wodurch die kontaktlose Datenübertragung nicht beeinträchtigt wird.

Auf die Sensor-Leiterplatte 8 ist eine Blende 14 aufgesetzt, die die Aussparung 3 des Cockpit-Moduls 2 abschließt. In der Blende 3 sind flexible Abdeckbereiche 16 hinter den Tastensensoren 10, 12 und eine Öffnung bzw. Aussparung 17 hinter dem Lautsprecher 11 vorgesehen. Eine drehbare Drehknopfabdeckung 18 wird auf den Drehknopf 13 gesetzt und ist mit einer Markierung 19 zur Kennzeichnung verschiedener Drehknopfstellungen gegenüber Symbolen 21 an dem Cockpit-Modul 2 ausgestattet. Bei der gezeigten mittleren Stellung der Markierung 19 wird als Funktionseinstellung eine Heckscheibenheizung auf einem Display 20 des Cockpit-Moduls 2 gezeigt, wobei über die Bedienungseinrichtungen 10, 12 eine Einstellung der jeweils gewählten Funktion möglich ist. Bei Betätigung eines Schalters, insbesondere bei Änderung einer Einstellung, wird von dem Lautsprecher 11 ein akustisches Signal ausgegeben. Die Bedienelemente 10, 12 weisen elektromechanische Stelleinrichtungen auf, die bei Betätigung durch den Benutzer einen elektromagnetischen Gegendruck aufbauen, um das Gefühl zu vermitteln, eine mechanische Taste gedrückt zu haben.

Der Einbau der gezeigten Eingabe-/Ausgabevorrichtung 1 erfolgt, indem die Verbindungsplatte 4 in die Aussparung 3 gesetzt und hierbei mit einer CAN-Schnittstelle ihrer nicht gezeigten Vorderseite an den CAN-Bus des Kraftfahrzeuges angeschlossen wird. Anschließend werden die Sensor-Leiterplatte 8 und die Abdeckung 14 nacheinander oder zusammengesetzt in die Aussparung 3 eingesetzt.

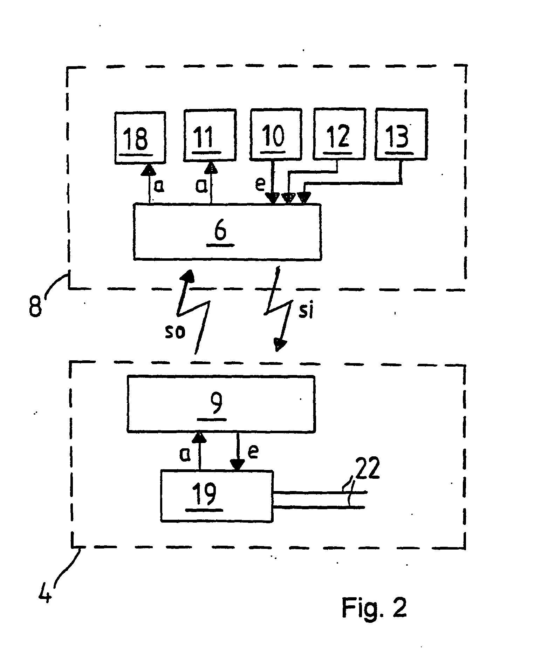

Der Signalfluss ist in Figur 2 wiedergegeben. Bei Betätigung der Eingabeeinrichtungen 10, 12, 13 werden von diesen Eingangssignale e zu den ersten Verbindungsmitteln 6 gegeben, die entsprechend kontaktlose Übertragungssignale si zu den zweiten Verbindungsmitteln 9 ausgeben, die die kontaktlosen Übertragungssignale wiederum in Eingangssignale e umwandeln und über die Anschlusseinrichtung 19 an Datenleitungen 22 ausgeben. Umgekehrt können Ausgabesignale a von der Anschlusseinrichtung 19 über die zweiten Verbindungsmittel 9 als kontaktlose Übertragungssignale so zu den ersten Verbindungsmitteln 6 und wiederum als Ausgabesignale a an eine Anzeigeeinrichtung 18 und einen Lautsprecher 11 ausgegeben werden.

## Patentansprüche

1. Eingabe-/Ausgabevorrichtung für ein Kraftfahrzeug-Cockpit, insbesondere eine Mittelkonsole, wobei die Eingabe-/Ausgabevorrichtung aufweist:
einen Sensorträger (8), an dem Bedienelemente (10, 12, 13) zur Bedienung durch einen Benutzer und zur Ausgabe von Eingabesignalen (e) und erste Verbindungsmittel (6) zur Aufnahme der Eingabesignale (e) und Ausgabe von kontaktlosen Übertragungssignalen (si) angeordnet sind, einen Anschlussträger (4), an dem zweite Verbindungsmittel (9) zur Aufnahme der kontaktlosen Übertragungssignale (si) von den ersten Verbindungsmitteln (6) und zur Ausgabe der Eingangssignale und eine Anschlusseinrichtung (19) zur Aufnahme der Eingabesignale (e) und Weiterleitung an Kraftfahrzeug-Datenleitungen (22) angeordnet sind, wobei der Sensorträger (8) und der Anschlussträger (4) an einem Cockpit-Modul (2) eines Kraftfahrzeuges befestigbar sind, **dadurch gekennzeichnet, dass** an dem Sensorträger (8) mindestens eine Ausgabeeinrichtung (11, 18), vorzugsweise ein Lautsprecher (11) und/oder eine optische oder akustische Ausgabeeinrichtung (18), vorgesehen ist.

2. Eingabe-/Ausgabevorrichtung nach Anspruch 1, **dadurch gekennzeichnet, dass** als Bedienelement mindestens ein Tastensensor (10, 12) und/oder mindestens ein Drehschalter (13) und/oder mindestens ein Mikrophon und/oder mindestens ein Wippschalter vorgesehen ist.

3. Eingabe-/Ausgabevorrichtung nach einem der vorherigen Ansprüche, **dadurch gekennzeichnet, dass** eine Leistungsversorgung des Bedienelementes (10, 12, 13), vorzugsweise auch der Ausgabeeinrichtung (11, 18), über die zweiten Verbindungsmittel (9) und die ersten Verbindungsmittel (6) erfolgt.

4. Eingabe-/Ausgabevorrichtung nach einem der vorherigen Ansprüche, **dadurch gekennzeichnet, dass** die ersten und zweiten Verbindungsmittel induktive und/oder kapazitive Antennen (6, 9) aufweisen.

5. Eingabe-/Ausgabevorrichtung nach Anspruch 4, **dadurch gekennzeichnet, dass** die Antennen (6, 9) durch Leiterbahnen ausgebildet sind.

6. Eingabe-/Ausgabevorrichtung nach einem der vorherigen Ansprüche, **dadurch gekennzeichnet, dass** eine Blende (14) zur Abdeckung des Sensorträgers (8) vorgesehen ist.

7. Eingabe-/Ausgabevorrichtung nach Anspruch 6, **dadurch gekennzeichnet, dass** in der Blende (14) vor dem Bedienelement (10; 12, 13) und/oder der Ausgabeeinrichtung (11, 18) eine Öffnung (17) oder eine flexible Abdeckung (16) vorgesehen ist.

8. Eingabe-/Ausgabevorrichtung nach einem der vorherigen Ansprüche, **dadurch gekennzeichnet, dass** der Sensorträger als Sensor-Leiterplatte (8) ausgebildet ist, auf deren Hinterseite das mindestens eine Bedienelement (10, 12, 13), vorzugsweise auch die Ausgabeeinrichtung (11, 18), angebracht ist.

9. Eingabe-/Ausgabevorrichtung nach einem der Ansprüche 1 bis 7, **dadurch gekennzeichnet, dass** der Sensorträger als Sensorfolie ausgebildet ist.

10. Eingabe-/Ausgabevorrichtung nach einem der vorherigen Ansprüche, **dadurch gekennzeichnet, dass** der Anschlussträger als Verbindungs-Leiterplatte (4) ausgebildet ist.

11. Eingabe-/Ausgabevorrichtung nach einem der Ansprüche 1 bis 9, **dadurch gekennzeichnet, dass** der Anschlussträger als Verbindungs-Folie ausgebildet ist.

12. Eingabe-/Ausgabevorrichtung nach einem der vorherigen Ansprüche, **dadurch gekennzeichnet, dass** mindestens ein Bedienelement als elektromechanisches Bedienelement ausgebildet, durch das bei Betätigung ein elektromechanisch erzeugter Gegendruck ausbildbar ist.

13. Eingabe-/Ausgabevorrichtung nach einem der vorherigen Ansprüche, **dadurch gekennzeichnet, dass** zumindest ein Bedienelement als elektrostatisches Bedienelement ausgebildet ist, auf dem bei Betätigung eine elektrostatische Ladung auf seiner Oberfläche ausbildbar ist.

14. Eingabe-/Ausgabevorrichtung nach einem der vorherigen Ansprüche, **dadurch gekennzeichnet, dass** bei Betätigung eines Bedienelementes (10, 12, 13) ein akustisches Signal, vorzugsweise ein kurzzeitiges akustisches Signal, zum Beispiel ein Klick-Signal, ausgebbar ist.

15. Eingabe-/Ausgabevorrichtung nach einem der vorherigen Ansprüche, **dadurch gekennzeichnet, dass** der Sensorträger, der Anschlussträger und eine Blende (14) in einer Aussparung (3) des Cockpit-Moduls (2) durch Befestigungsmittel, vorzugsweise Rastmittel oder eine formschlüssige Passung, einsetzbar sind.

16. Eingabe-/Ausgabevorrichtung nach Anspruch 15, **dadurch gekennzeichnet, dass** die Blende (14) auf den Sensorträger (8) aufgesetzt wird.

17. Eingabe-/Ausgabevorrichtung nach einem der vorherigen Ansprüche **dadurch gekennzeichnet, dass** der Sensorträger (8) auf dem Anschlussträger (4) derartig befestigt ist, dass die ersten Verbindungsmittel (6) des Sensorträgers und die zweiten Verbindungsmittel (9) des Anschlussträgers sich gegenüberliegen.

## Claims

1. Input/output apparatus for a motor vehicle cockpit, in particular a central console, with the input/output apparatus having:
a sensor carrier (8) on which are arranged operator control elements (10, 12, 13) for allowing a user to operate said apparatus and for outputting input signals (e), and first connecting means (6) for receiving the input signals (e) and outputting contactless transmission signals (si), a connection carrier (4) on which are arranged second connecting means (9) for receiving the contactless transmission signals (si) from the first connecting means (6) and for outputting the input signals, and a connection device (19) for receiving the input signals (e) and forwarding them to motor-vehicle data lines (22), it being possible to secure the sensor carrier (8) and the connection carrier (4) to a cockpit module (2) of a motor vehicle, **characterized in that** at least one output device (11, 18), preferably a loudspeaker (11) and/or an optical or acoustic output device (18), is provided on the sensor carrier (8).

2. Input/output apparatus according to Claim 1, **characterized in that** the operator control element provided is at least one key sensor (10, 12) and/or at least one rotary switch (13) and/or at least one microphone and/or at least one rocker switch.

3. Input/output apparatus according to either of the preceding claims, **characterized in that** power is supplied to the operator control element (10, 12, 13), preferably to the output device (11, 18) too, via the second connecting means (9) and the first connecting means (6).

4. Input/output apparatus according to one of the preceding claims, **characterized in that** the first and second connecting means have inductive and/or capacitive antennas (6, 9).

5. Input/output apparatus according to Claim 4, **characterized in that** the antennas (6, 9) are formed by conductor tracks.

6. Input/output apparatus according to one of the preceding claims, **characterized in that** a screen (14) for covering the sensor carrier (8) is provided.

7. Input/output apparatus according to Claim 6, **characterized in that** an opening (17) or a flexible cover (16) is provided in the screen (14) in front of the operator control element (10, 12, 13) and/or the output device (11, 18).

8. Input/output apparatus according to one of the preceding claims, **characterized in that** the sensor carrier is in the form of a sensor printed circuit board (8) which has the at least one operator control element (10, 12, 13), preferably also the output device (11, 18), fitted to its rear face.

9. Input/output apparatus according to one of Claims 1 to 7, **characterized in that** the sensor carrier is in the form of a sensor film or foil.

10. Input/output apparatus according to one of the preceding claims, **characterized in that** the connection carrier is in the form of a connecting printed circuit board (4).

11. Input/output apparatus according to one of Claims 1 to 9, **characterized in that** the connection carrier is in the form of a connecting film or foil.

12. Input/output apparatus according to one of the preceding claims, **characterized in that** at least one operator control element is in the form of an electromechanical operator control element which can form an electromechanically generated counterpressure when it is operated.

13. Input/output apparatus according to one of the preceding claims, **characterized in that** at least one operator control element is in the form of an electrostatic operator control element on whose surface an electrostatic charge can be formed when it is operated.

14. Input/output apparatus according to one of the preceding claims, **characterized in that** an acoustic signal, preferably a brief acoustic signal, for example a click signal, can be output when an operator control element (10, 12, 13) is operated.

15. Input/output apparatus according to one of the preceding claims, **characterized in that** the sensor carrier, the connection carrier and a screen (14) can be inserted in a cutout (3) in the cockpit module (2) by securing means, preferably latching means or a form fit.

16. Input/output apparatus according to Claim 15, **characterized in that** the screen (14) is mounted on the sensor carrier (8).

17. Input/output apparatus according to one of the preceding claims, **characterized in that** the sensor carrier (8) is secured on the connection carrier (4) in such a way that the first connecting means (6) of the sensor carrier and the second connecting means (9) of the connection carrier are opposite one another.

## Revendications

1. Dispositif d'entrée/ sortie pour un poste de conduite de véhicule automobile, en particulier une console centrale, le dispositif d'entrée/ sortie présentant :
- un support de capteur (8) comportant des éléments de commande (10, 12, 13) qu'un utilisateur peut exploiter et qui permettent de sortir des signaux d'entrée (e), ainsi que des premiers moyens de liaison (6) permettant de recevoir les signaux d'entrée (e) et de sortir des signaux de transmission sans contact (si),
- un support de connexion (4) comportant des deuxièmes moyens de liaison (9) permettant de recevoir les signaux de transmission sans contact (si) provenant des premiers moyens de liaison (6) et de sortir les signaux d'entrée, ainsi qu'un système de connexion (19) permettant de recevoir les signaux d'entrée (e) et de les rediriger vers des lignes de données (22) du véhicule automobile,
- le support de capteur (8) et le support de connexion (4) pouvant être fixés à un module de poste de pilotage (2) d'un véhicule automobile,
**caractérisé par**
au moins un système de sortie (11, 18), de préférence un haut-parleur (11) et/ ou un système de sortie optique ou sonore (18) prévus sur le support de capteur (8).

2. Dispositif d'entrée/sortie selon la revendication 1,
**caractérisé en ce que**
l'élément de commande est au moins un capteur à boutons (10, 12) et/ou un commutateur rotatif (13) et/ou un microphone et/ou un commutateur à bascule.

3. Dispositif d'entrée/sortie selon l'une des revendications précédentes,
**caractérisé en ce que**
l'alimentation de puissance de l'élément de commande (10, 12, 13), de préférence du système de sortie (11, 18) également, s'effectue par l'intermédiaire des deuxièmes moyens de liaison (9) et des premiers moyens de liaison (6).

4. Dispositif d'entrée/sortie selon l'une des revendications précédentes,
**caractérisé en ce que**
les premiers et deuxièmes moyens de liaison ont des antennes inductives et/ou capacitives (6, 9).

5. Dispositif d'entrée/sortie selon la revendication 4,
**caractérisé en ce que**
les antennes (6, 9) sont réalisées par des pistes conductrices.

6. Dispositif d'entrée/sortie selon l'une des revendications précédentes,
**caractérisé en ce qu'**
un bandeau (14) recouvre le support de capteur (8).

7. Dispositif d'entrée/sortie selon la revendication 6,
**caractérisé par**
une ouverture (17) ou un couvercle souple (16) devant l'élément de commande (10, 12, 13) et/ou le système de sortie (11, 18) dans le bandeau (14).

8. Dispositif d'entrée/sortie selon l'une des revendications précédentes,
**caractérisé en ce que**
le support de capteur est réalisé sous la forme d'une carte de circuit imprimé de capteur (8) dont la face arrière porte également l'élément de commande (10, 12, 13), de préférence le système de sortie (11, 18).

9. Dispositif d'entrée/sortie selon l'une des revendications 1 à 7,
**caractérisé en ce que**
le support de capteur est réalisé sous la forme d'une feuille de détection.

10. Dispositif d'entrée/sortie selon l'une des revendications précédentes,
**caractérisé en ce que**
le support de connexion est réalisé sous la forme d'une carte de circuit imprimé de liaison (4).

11. Dispositif d'entrée/ sortie selon l'une des revendications 1 à 9,
**caractérisé en ce que**
le support de connexion est réalisé sous la forme d'une feuille de liaison.

12. Dispositif d'entrée/sortie selon l'une des revendications précédentes,
**caractérisé en ce que**
l'élément de commande est réalisé sous la forme d'un élément de commande électromécanique dont l'actionnement produit une contre-pression de façon électromécanique.

13. Dispositif d'entrée/sortie selon l'une des revendications précédentes,
**caractérisé en ce que**
l'élément de commande est réalisé sous la forme d'un élément de commande électrostatique dont l'actionnement produit une charge électrostatique sur sa surface.

14. Dispositif d'entrée/sortie selon l'une des revendications précédentes,
**caractérisé en ce que**
l'actionnement de l'élément de commande (10, 12, 13) produit un signal sonore, de préférence un signal sonore de courte durée, par exemple un signal « clic ».

15. Dispositif d'entrée/sortie selon l'une des revendications précédentes,
**caractérisé en ce que**
le support de capteur, le support de connexion et un bandeau (4) peuvent être installés dans un évidement (3) ménagé dans le module de poste de conduite (2) à l'aide de moyens de fixation, de préférence des moyens d'accrochage ou un système s'adaptant par complémentarité de forme.

16. Dispositif d'entrée/sortie selon la revendication 15,
**caractérisé en ce que**
le bandeau (14) est appliqué sur le support de capteur (8).

17. Dispositif d'entrée/sortie selon l'une des revendications précédentes,
**caractérisé en ce que**
le support de capteur (8) est fixé au support de connexion (4) de telle sorte que les premiers moyens de liaison (6) du support de capteur et les deuxièmes moyens de liaison (9) du support de connexion se font face.
